# EUROPEAN PATENT APPLICATION

(11) **EP 4 752 609 A1**
(43) Date of publication of application: **03.06.2026**
(21) Application number: 25201159.8
(22) Date of filing: 09.09.2025
(51) Int. Cl.: G02B 6/12, G02B 6/125, G02B 6/30, G02B 6/13

(54) **COUPLING DEVICE AND ELECTRONIC DEVICE INCLUDING THE SAME**

(30) Priority: 29.11.2024 KR 20240175807
(71) Applicant: Samsung Electronics Co., Ltd., Suwon-si, Gyeonggi-do 16677 (KR)
(72) Inventor: BYUN, Hyunil, 16678 Suwon-si (KR); CHOI, Heejin, 16678 Suwon-si (KR); SEO, Wontaek, 16678 Suwon-si (KR)
(74) Representative: Arnold & Siedsma

(57) **Abstract**

A coupling device includes: a substrate including first through third surfaces; and a first coupling waveguide including: a first waveguide in the third surface, the first waveguide including a first end portion and a second end portion, wherein the first end portion is exposed at the first surface, the second end portion is inside the substrate, and the first waveguide further includes a transmission path from the first end portion to the second end portion in a first direction parallel to the third surface; and a second waveguide including a third end portion and a fourth end portion, wherein the third end portion is adjacent to the first waveguide within the substrate, the fourth end portion is exposed at the second surface, and a distance from the third surface to the third end portion is different from a distance from the third surface to the fourth end portion.

## Description

### BACKGROUND

### 1. Field

The disclosure relates to a coupling device and an electronic device including the same.

### 2. Description of Related Art

Optical interconnect is a technology that converts electrical data into optical signals and transmits the optical signals. Starting with intercontinental (thousands of kilometers) optical communication in the 1980s, optical interconnect has gradually expanded to shorter distances by connecting cities (tens to hundreds of kilometers), data centers (several kilometers to tens of kilometers), and racks in data centers (tens of kilometers to several kilometers). The reason for this is the exponentially increasing demand for data transmission.

Electric charges are transferred in electrical interconnect via a copper wire, but there is a problem in that power efficiency decreases due to a skin effect in which the resistance of the wire increases as the transmission speed increases. However, optical interconnect does not have such a problem of electrical interconnect, and thus, optical interconnect, which has clear advantages, has replaced electrical interconnect for long-distance communication.

In such optical communication, light transmitted through an optical fiber may be converted back into an electrical signal, and as a result, various technologies have been sought to connect optical fibers with a photonic integrated circuit (PIC) equipped with optical elements for photoelectric conversion.

### SUMMARY

Provided is a coupling device that may be used to connect optical fibers to a photonic integrated circuit (PIC).

According to an aspect of the disclosure, a coupling device as defined in any of the claims 1-12 is provided.

According to another aspect of the disclosure, a method of manufacturing a coupling device as defined in appended claim 13 or 14 is provided.

According to yet another aspect of the disclosure, an electronic device as defined in appended claim 15 is provided.

Additional aspects will be set forth in part in the description which follows and, in part, will be apparent from the description, or may be learned by practice of the presented embodiments of the disclosure.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is a perspective view showing a schematic structure of a coupling device according to an embodiment;
FIG. 2A is a detailed perspective view illustrating coupling waveguides provided in the coupling device of FIG. 1;
FIGS. 2B and 2C are side views respectively illustrating a first surface and a second surface of the coupling device of FIG. 1;
FIG. 3 shows a computationally simulated electromagnetic field distribution at a position where a first waveguide and a second waveguide are adjacent to each other in the coupling device of FIG. 1;
FIG. 4 is a perspective view showing a schematic structure of a coupling device according to an embodiment;
FIGS. 5A and 5B are side views respectively illustrating a first surface and a second surface of the coupling device of FIG. 4;
FIGS. 6A and 6B are side views respectively illustrating a first surface and a second surface of the coupling device according to an embodiment;
FIG. 7 is a perspective view showing a schematic structure of a coupling device according to an embodiment;
FIG. 8 is a detailed perspective view illustrating coupling waveguides provided in the coupling device of FIG. 7;
FIG. 9 is a detailed perspective view illustrating coupling waveguides provided in the coupling device according to an embodiment;
FIG. 10 is a flowchart illustrating a method of manufacturing a coupling device according to embodiments;
FIG. 11 is a block diagram schematically illustrating an electronic device according to an embodiment; and
FIG. 12 schematically illustrates an electronic device according to an embodiment.

### DETAILED DESCRIPTION

Reference will now be made in detail to non-limiting example embodiments of the disclosure, with reference to the accompanying drawings, wherein like reference numerals refer to like elements throughout. In this regard, embodiments of the disclosure may have different forms and should not be construed as being limited to the descriptions set forth herein. Accordingly, the example embodiments are merely described below, by referring to the figures, to explain example aspects. As used herein, the term "and/or" includes any and all combinations of one or more of the associated listed items. Expressions such as "at least one of," when preceding a list of elements, modify the entire list of elements and do not modify the individual elements of the list.

Hereinafter, non-limiting example embodiments of the disclosure are described in detail with reference to the accompanying drawings. The example embodiments described below are merely illustrative, and various modifications are possible from these embodiments. In the drawings, the same reference numerals refer to the same components, and the size of each component in the drawings may be exaggerated for clarity and convenience of description.

It will be understood that when an element or layer is referred to as being "on" or "above" another element or layer, the element or layer may be directly on another element or layer or intervening elements or layers.

Terms such as "first" and "second" may be used to describe various components, but are used only for the purpose of distinguishing one component from another. These terms do not limit the difference in the material or structure of the components.

Singular expressions include plural expressions unless the context clearly means otherwise. In addition, when a part "contains," "includes," or "comprises" a component, this means that it may contain other components, rather than excluding other components, unless otherwise stated.

Further, the terms "unit," "module," or the like mean a unit that processes at least one function or operation, which may be implemented in hardware or software or implemented in a combination of hardware and software.

The use of the term "the" and similar indicative terms may correspond to both singular and plural.

The operations constituting a method of the disclosure may be performed in an appropriate order unless there is an explicit mention that the operations should be performed in the order described. In addition, the use of all illustrative terms (e.g., etc.) is simply intended to detail example aspects, and the scope of rights is not limited due to the terms.

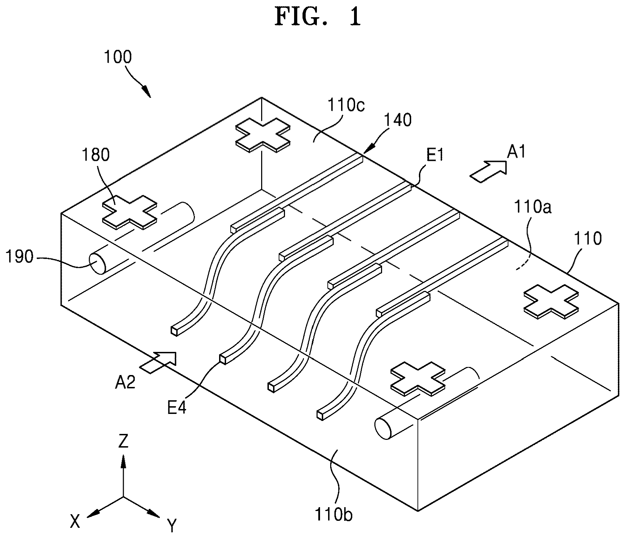

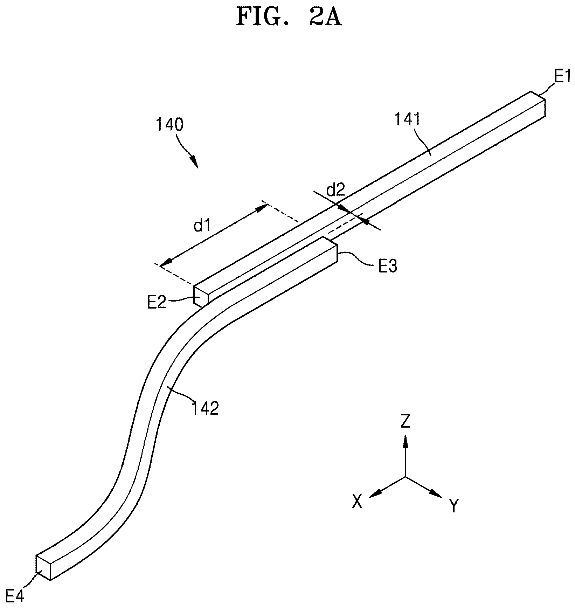

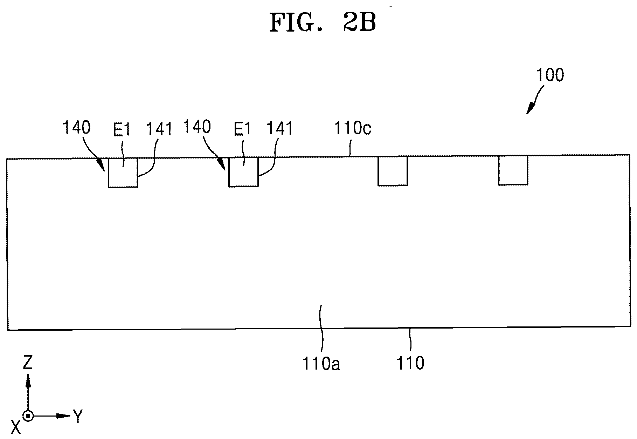

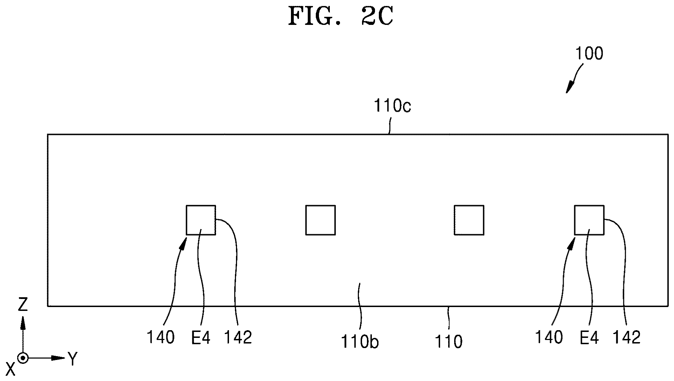

FIG. 1 is a perspective view showing a schematic structure of a coupling device 100 according to an embodiment. FIG. 2A is a detailed perspective view illustrating a coupling waveguide provided in the coupling device 100 of FIG. 1. FIGS. 2B and 2C are side views respectively illustrating a first surface and a second surface of the coupling device 100 of FIG. 1.

The coupling device 100 may be provided to connect two different types of waveguides, and may include a substrate 110 and coupling waveguides 140 provided in the substrate 110. The coupling device 100 may optically connect, for example, a waveguide providing an optical transmission path in a direction A2 to a waveguide providing an optical transmission path in a direction A1. The coupling device 100 may include one or more coupling waveguides 140. The number of the illustrated coupling waveguides 140 is only an example and may be variously changed.

The substrate 110 may include a first surface 110a and a second surface 110b facing away from each other, and a third surface 110c connected to the first surface 110a and the second surface 110b between the first surface 110a and the second surface 110b. The third surface 110c may be referred to as a top surface of the substrate 110. Although the substrate 110 is illustrated in a rectangular parallelepiped shape, embodiments are not limited thereto. The substrate 110 may include glass. The substrate 110 may also include various transparent plastic materials.

The coupling waveguide 140 may include a first waveguide 141 and a second waveguide 142.

The first waveguide 141 may be positioned to be inserted from the third surface 110c of the substrate 110 toward the inside of the substrate 110. That is, the top surface of the first waveguide 141 may be coplanar with the third surface 110c, which may be the top surface of the substrate 110. The first waveguide 141 may include a first end portion E1 and a second end portion E2. the end portion E1 may be exposed at the first surface 110a, and the second end portion E2 may be located inside the substrate 110. The first waveguide 141 may have a refractive index different from a refractive index of the substrate 110. The refractive index of the first waveguide 141 may be greater than the refractive index of the substrate 110. The first waveguide 141 may form a transmission path in which a distance from the third surface 110c is constant. That is, the first waveguide 141 may extend parallel to the third surface 110c. The first waveguide 141 may form a transmission path in a first direction (e.g., X direction). The first waveguide 141 may include a material into which ions are implanted into a material forming the substrate 110. In other words, the first waveguide 141 may be manufactured by implanting ions into the substrate 110 at a position where the first waveguide 141 is to be formed. This manufacturing method is called a lithography method. As shown, the waveguide manufactured in this way forms a transmission path parallel to the third surface 110c of the substrate 110 and does not form a transmission path to another depth location inside the substrate 110.

The second waveguide 142 may be arranged adjacent to the first waveguide 141. The second waveguide 142 may include a third end portion E3 and a fourth end portion E4, the third end portion E3 may be located adjacent to the first waveguide 141 inside the substrate 110, and the fourth end portion E4 may be exposed at the second surface 110b. The third end portion E3 and the fourth end portion E4 may have different distances from each other from the third surface 110c. The fourth end portion E4 may have a height position different from a height position of the third end portion E3. In other words, the second waveguide 142 may form a transmission path in which a distance from the third surface 110c is not constant. As shown, a partial region of the second waveguide 142 may form a transmission path parallel to the third surface 110c, and the remaining region of the second waveguide 142 may forms a transmission path in which the distance from the third surface 110c gradually increases.

As shown, the third end portion E3 may have the same height as the heights of the second end portion E2 and the first end portion E1. This arrangement is an example in which coupling between the first waveguide 141 and the second waveguide 142 may occur in a Y direction parallel to the third surface 110c, but embodiments are not limited thereto. In an embodiment, the second waveguide 142 may be located under the first waveguide 141, and the third end portion E3 may be located at a position lower than the first end portion E1 and the second end portion E2, that is, may be located at a distance farther from the third surface 110c within the substrate 110. In this case, coupling between the first waveguide 141 and the second waveguide 142 may occur in a Z direction perpendicular to the third surface 110c.

The refractive index of the second waveguide 142 may be greater than the refractive index of the substrate 110. The second waveguide 142 may include a material in which a material forming the substrate 110 is denatured by a laser. In other words, the second waveguide 142 may be manufactured by melting a material forming the substrate 110 with strong energy to change the refractive index by forming a focus of a laser beam at a position inside the substrate 110 where the second waveguide 142 is to be formed. This manufacturing method is called a writing method. In this way, it is possible to form the focus of the laser beam at a desired location inside the substrate 110, thus forming a three-dimensional transmission path that may variously set the distance from the third surface 110c, which may be the top surface of the substrate 110.

The positional relationship between the first waveguide 141 and the second waveguide 142 may be set so that the light traveling through the second waveguide 142 is transmitted to the first waveguide 141. For example, light incident on the second waveguide 142 through the fourth end portion E4 may be transferred to the first waveguide 141 at a position where the second waveguide 142 is adjacent to the first waveguide 141. As shown in detail in FIG. 2A, the first waveguide 141 and the second waveguide 142 may be positioned so that some regions thereof overlap when viewed from a second direction (Y direction). The second direction may be parallel to the third surface 110c of the substrate 110 and perpendicular to the first direction (e.g., X direction), which is the direction of the transmission path of the first waveguide 141. The overlapping length d1 may be approximately 0.1 mm to 5 mm. At the overlapping position, a distance d2 between the first waveguide 141 and the second waveguide 142 may be approximately 3 µm or less. These values are only examples and may be changed to appropriate values capable of coupling between the first waveguide 141 and the second waveguide 142.

Although the first waveguide 141 and the second waveguide 142 may be manufactured based on the same material, they may include different materials due to different detailed manufacturing methods, and thus may have different refractive indices. A difference between the refractive index of the first waveguide 141 and the refractive index of the second waveguide 142 may be about 0.003 or less. This value is only an example and may be changed to appropriate values capable of coupling between the first waveguide 141 and the second waveguide 142.

The coupling device 100 may further include an alignment mark 180. The alignment mark 180 may be formed at a position that is introduced into the substrate 110 from the third surface 110c of the substrate 110. The alignment mark 180 may be provided to provide an alignment reference when forming the second waveguide 142 after forming the first waveguide 141, or when forming the first waveguide 141 after forming the second waveguide 142.

The alignment mark 180 may be manufactured together when manufacturing the first waveguide 141. The alignment mark 180 may include the same material as a material of the first waveguide 141. The position or number of the alignment marks 180 is illustrative and is not limited to the illustrated form.

The alignment mark 180 may include a material different from a material of the first waveguide 141. For example, the alignment mark 180 may include a photoresist material and a metal material, and may be manufactured separately from the process of forming the first waveguide 141.

The coupling device 100 may further include a guide pin hole 190. The guide pin hole 190 may be a hole formed inside the substrate 110 so that the hole is opened through the second surface 110b. For example, a guide pin of an optical fiber array may be coupled to the guide pin hole 190. The position or number of the guide pin holes 190 is only an example and is not limited to the illustrated form. The guide pin hole 190 may be provided separately from the substrate 110. For example, a socket in which the guide pin hole 190 is formed may be coupled to the substrate 110.

The coupling device 100 according to an embodiment may connect different types of waveguides, and for example, a waveguide of a photonic integrated circuit (PIC) and an optical fiber may be connected. Considering that the outer diameter of the optical fiber may be approximately 125 µm, the separation distance between two adjacent optical fibers may be at least 127 µm. On the other hand, the distance between adjacent waveguides in the PIC may be about 2 µm to about 3 µm. In addition, the mode size of light transmitted along the optical fiber, that is, the size of the area in which light is distributed in the optical fiber cross section, may be approximately 10 µm diameter, while the mode size in the PIC may be about 0.2 µm × 0.5 µm. As described above, two waveguides having different environmental conditions are difficult to be combined only with a structure capable of forming only a two-dimensional transmission path. The coupling device 100 according to an embodiment may form different types of transmission paths and include the first waveguide 141 and the second waveguide 142 manufactured in different ways, thereby providing an effective data transmission structure.

In addition, the coupling device 100 according to an embodiment may also appropriately utilize the second waveguide 142 having a relatively long manufacturing time, thereby reducing the overall manufacturing time. For example, in the coupling waveguide 140, the length of the first waveguide 141 may be formed as long as possible, and the length of the second waveguide 142 may be relatively shortened. The length of the first waveguide 141 in the first direction (e.g., X direction), which may be a direction of the transmission path of the first waveguide 141, may be about 50 % or more of the length of the substrate 110 in the X direction. Alternatively, the length of the first waveguide 141 in the first direction (e.g., X direction) may be about 60 % or more, or about 70% or more of the length of the substrate 110 in the X direction. These values are illustrative and are not limited thereto. As the length of the first waveguide 141 in the first direction (e.g., X direction) increases, the length of the second waveguide 142 may be shortened, and the total time taken to manufacture the coupling waveguide 140 may be shortened.

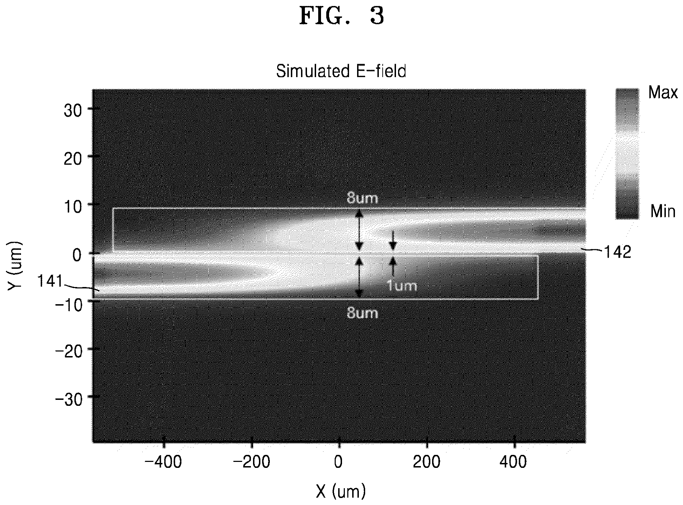

FIG. 3 shows a computationally simulated electromagnetic field distribution at a position in which the first waveguide and the second waveguide are adjacent to each other in the coupling device of FIG. 1.

It may be seen that a difference between the refractive index of the first waveguide 141 and the refractive index of the second waveguide 142 may be about 0.0025, and light transmitted through the first waveguide 141 and the second waveguide 142 may be transferred to the second waveguide 142 at a position adjacent to the first waveguide 141. When the distance between the first waveguide 141 and the second waveguide 142 is about 1 µm, it is confirmed that about 99.67 % of the optical power has been transferred to another waveguide during traveling of about 1 mm.

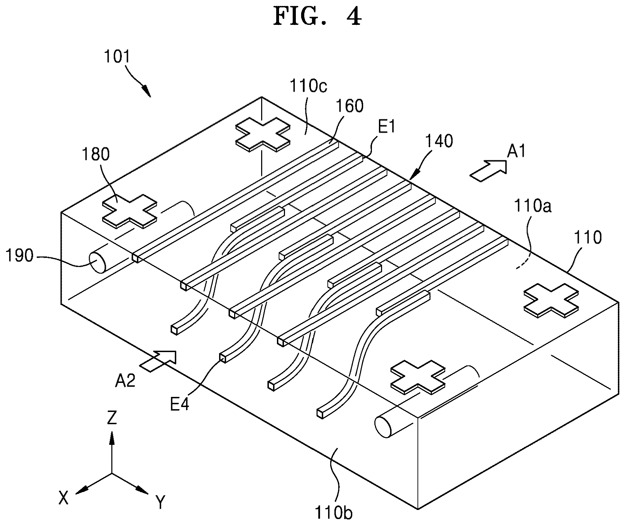

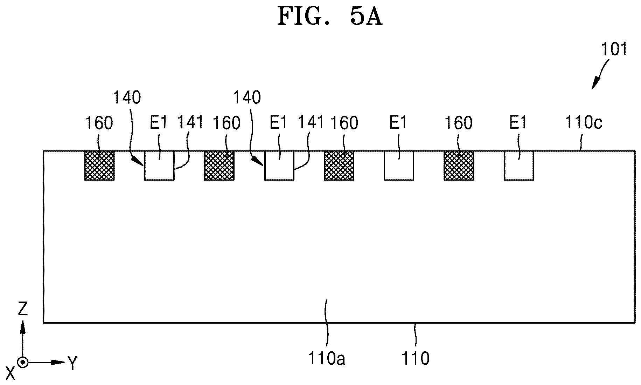

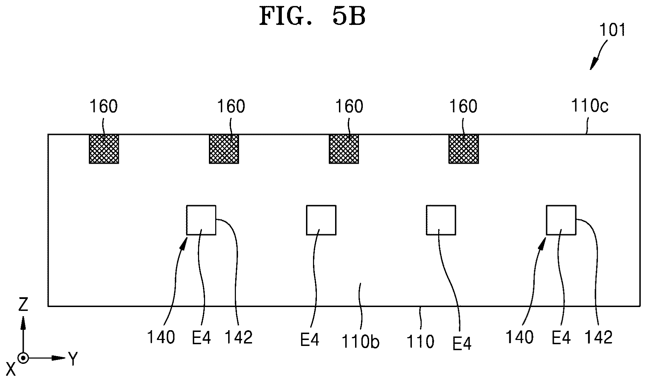

FIG. 4 is a perspective view showing a schematic structure of a coupling device according to an embodiment. FIGS. 5A and 5B are side views respectively illustrating a first surface and a second surface of the coupling device of FIG. 4.

A coupling device 101 is different from the coupling device 100 shown in FIG. 1 in that the former further includes a third waveguide 160.

The third waveguide 160 may extend from the first surface 110a to the second surface 110b, and may be a waveguide having a constant distance from the third surface 110c. The third waveguide 160 may include the same material as the first waveguide 141. The third waveguide 160 may be manufactured together with the first waveguide 141 during manufacturing the first waveguide 141. That is, the third waveguide 160 may be positioned from the third surface 110c of the substrate 110 toward the inside of the substrate 110, and may be manufactured by ion implantation at a position where the third waveguide 160 is to be formed in the substrate 110.

As shown in FIG. 5A, the end portions of the third waveguides 160 and the first end portions E1 of the first waveguides 141 of the coupling waveguides 140 may all be arranged in a same row at the first surface 110a of the coupling device 101. Unlike this, at the second surface 110b of the coupling device 101, as shown in FIG. 5B, the end portions of the third waveguides 160 may be arranged in a single row, and the fourth end portions E4 of the second waveguides 142 of the coupling waveguides 140 are arranged in another single row at positions different from those of the third waveguides 160, with a result that the end portions may be arranged in two rows as a whole.

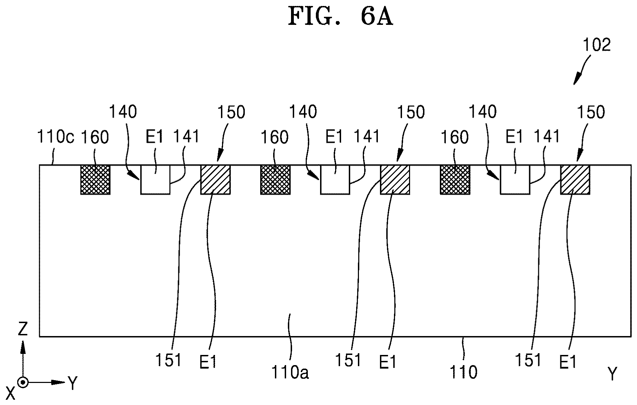

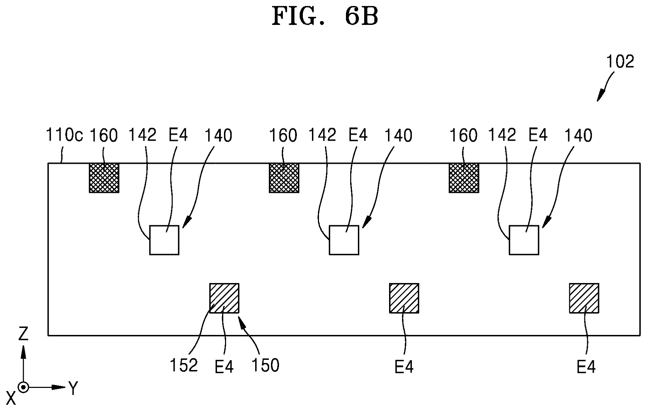

FIGS. 6A and 6B are side views respectively illustrating a first surface and a second surface of the coupling device according to an embodiment.

The coupling device 102 of the present embodiment is different from the coupling device 101 of FIG. 4 in that the coupling device 102 further includes a coupling waveguide 150 in addition to the coupling waveguide 140 and the third waveguide 160 provided in the coupling device 101 of FIG. 4.

The coupling waveguide 150 may be similar to the coupling waveguide 140 in that the coupling waveguide 150 may include the first waveguide 141 and the second waveguide 142 as described in detail with reference to FIG. 2A, but a fourth end portion E4 of the second waveguide 152 may be positioned in the substrate 110 to a different depth from the fourth end portion E4 of the second waveguide 142. That is, the fourth end portion E4 of the second waveguide 152 and the fourth end portion E4 of the second waveguide 142 may have different distances from the third surface 110c.

As shown in FIG. 6A, the end portions of the third waveguide 160, the first end portions E1 of the first waveguide 141 of the coupling waveguide 140, and the first end portions E1 of the first waveguide 151 of the coupling waveguide 150 may all be arranged in a same row at the first surface 110a of the coupling device 102. Unlike this, at the second surface 110b of the coupling device 102, as shown in FIG. 6B, the end portions of the third waveguides 160 may be arranged in a single row, the fourth end portions E4 of the second waveguides 142 of the coupling waveguides 140 may be arranged in a single row at positions different from positions of the third waveguides 160, and the fourth end portions E4 of the second waveguide 152 of the coupling waveguide 150 may be arranged in another single row at positions different from positions of the coupling waveguides 140, with a result that the total end portions may be arranged in three rows as a whole.

In an embodiment, the coupling device may further include coupling waveguides having fourth end portions at other positions. That is, end portions of the coupling waveguides may be arranged in a plurality of rows, that is, in three or more rows at the second surface 110b.

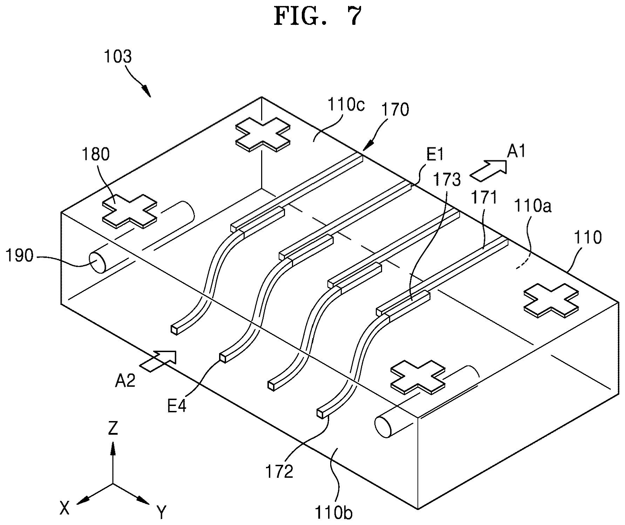

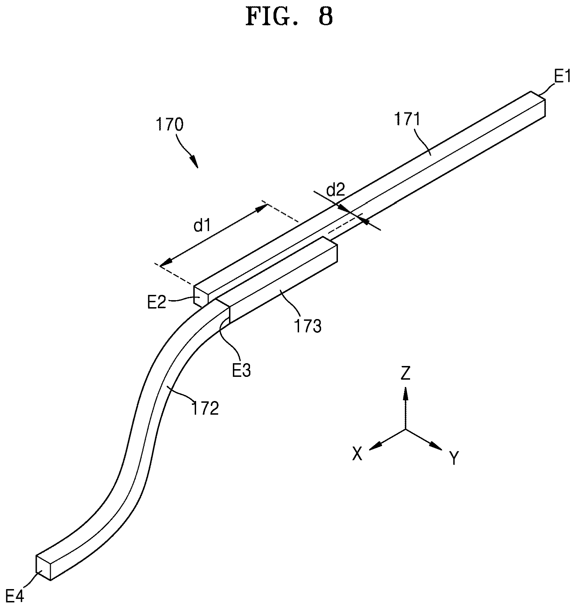

FIG. 7 is a perspective view showing a schematic structure of a coupling device according to an embodiment, and FIG. 8 is a detailed perspective view illustrating coupling waveguides provided in the coupling device of FIG. 7.

In the coupling device 103 of the present embodiment, detailed configuration of the coupling waveguide 170 may be different from the coupling waveguide 140 of FIG. 1.

The coupling waveguide 170 provided in the coupling device 103 may include a first waveguide 171 and a second waveguide 172, and also may include a directional coupler 173 arranged between the first waveguide 171 and the second waveguide 172.

Similar to the first waveguide 141 described above, the first waveguide 171 may include a first end portion E1 and a second end portion E2, and may form a transmission path parallel to the third surface 110c of the substrate 110.

The directional coupler 173 may be arranged adjacent to the first waveguide 171 and may be parallel to the first waveguide 171. The directional coupler 173 may include the same material as a material of the first waveguide 171. The directional coupler 173 may be formed together by the same process in the operation of manufacturing the first waveguide 171. When viewed from the second direction (e.g., Y direction), the directional coupler 173 may be arranged to overlap the first waveguide 171. The second direction may be parallel to the third surface 110c of the substrate 110 and perpendicular to the first direction (e.g., X direction), which may be the direction of the transmission path of the first waveguide 171. An overlapping length between the directional coupler 173 and the first waveguide 171 may be an overlapping length d1. An interval between the directional coupler 173 and the first waveguide 171 may be a distance d2. The overlapping length d1 and the distance d2 may be set so that light transmitted along the first waveguide 171 may be transferred to the directional coupler 173. For example, the overlapping length d1 may be approximately 0.1 mm to 5 mm, and the distance d2 may be approximately 3 µm or less.

The directional coupler 173 may be arranged adjacent to the second waveguide 172. Similar to the second waveguide 142 described above, the second waveguide 172 may include a third end portion E3 and a fourth end portion E4 having different depth positions within the substrate 110. One end of the directional coupler 173 may be in contact with the third end portion E3. The second waveguide 172 may form a transmission path in which a distance from the third surface 110c gradually increases.

The coupling device of an embodiment may include the coupling waveguide 170 illustrated in FIG. 7 and the coupling waveguide 140 illustrated in FIG. 1.

The coupling device of an embodiment may include the planar third waveguide 160 illustrated in FIG. 4 together with the coupling waveguide 170 illustrated in FIG. 7.

The coupling device of an embodiment may include the coupling waveguides 170 having the structure illustrated in FIG. 7, and there may be two or more types of depth positions of the fourth end portions E4 in the substrate 110.

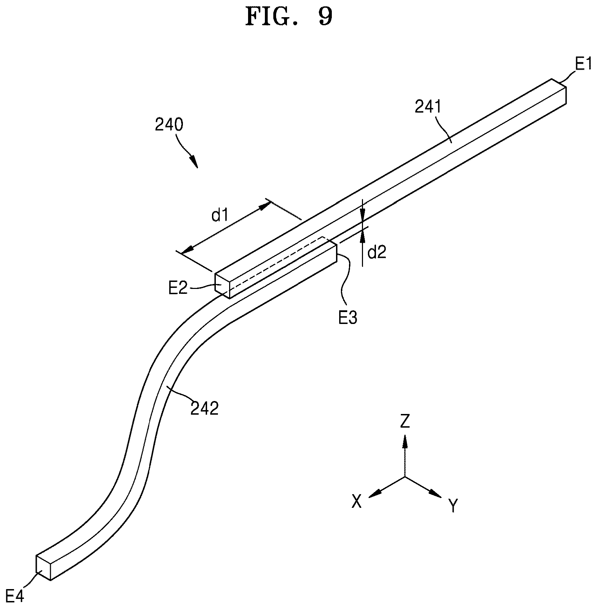

FIG. 9 is a detailed perspective view illustrating coupling waveguides provided in the coupling device of FIG. 7 according to an embodiment.

The coupling waveguide 240 provided in the coupling device of the present embodiment is different from the coupling waveguide 140 shown in FIG. 2A with respect to a relative positional relationship between a first waveguide 241 and a second waveguide 242.

The second waveguide 242 may be arranged under the first waveguide 241, that is, at a position deeper than the first waveguide 241 in the substrate (e.g., substrate 110 of FIG. 1). The third end portion E3 may have a height position different from a height position of the second end portion E2, and in other words, the third end portion E3 and the second end portion E2 may have different distances from the third surface (e.g., the third surface 110c of FIG. 1).

The first waveguide 241 and the second waveguide 242 may be arranged so that some areas thereof overlap when viewed from the Z direction. In this arrangement, the coupling between the first waveguide 241 and the second waveguide 242 may occur in the Z direction.

For the materials or shapes of the first waveguide 241 and the second waveguide 242, spacing or overlapping length between the first waveguide 241 and the second waveguide 242, the remaining descriptions of the first waveguide 141 and the second waveguide 142 described above may be applied.

The coupling waveguide 240 may be applied to the coupling devices 100, 101, 102, and 103 described above, and for example, may be provided instead of or together with the coupling waveguides 140, 150, and 170.

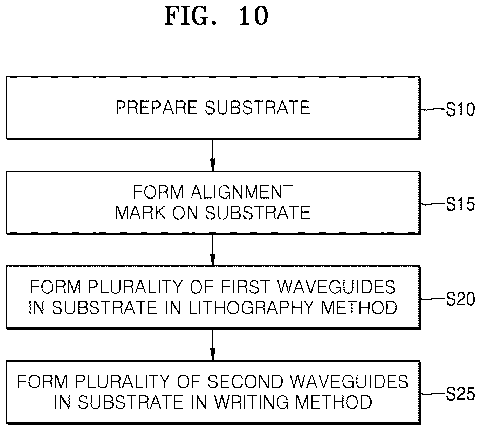

FIG. 10 is a flowchart illustrating a method of manufacturing a coupling device according to embodiments.

A method of manufacturing a coupling device may include forming, in a substrate, a first waveguide having a transmission path in which a distance from a substrate surface is constant, and forming, in the substrate, a second waveguide having a transmission path in which a distance from the substrate surface is not constant.

The first waveguide may be manufactured using an ion implantation method, and the second waveguide may be manufactured using a laser beam irradiation method. The first waveguide and the second waveguide manufactured as described above may have a shape of the first waveguide and the second waveguide described above.

A method of manufacturing a coupling device is described as follows.

First, a substrate may be prepared (operation S10). The substrate 110 may include a glass material, or may include various other transparent plastic materials.

The substrate may be prepared in a rectangular parallelepiped-shaped block, but is not limited thereto. A guide pin hole as described in FIG. 1 may be formed in advance on the substrate.

Next, an alignment mark may be formed on (e.g., in) the substrate (operation S15), and a plurality of first waveguides may be formed in the substrate in a lithographic method (operation S20). The operation S15 of forming the alignment mark and the operation S20 of forming the first waveguides may be performed together in the same process. For example, a mask with a pattern suitable for the shape and number of alignment marks and first waveguides may be arranged on the substrate, and ions may be implanted into the substrate. Accordingly, the refractive index of the substrate in the ion-implanted position is changed, and thus an alignment mark and a first waveguide may be formed.

Next, a plurality of second waveguides may be formed in a writing method (operation S25). For example, a method of gathering the focus of a high-power pulse laser to a position inside the substrate where the second waveguide is to be formed may be used. The substrate material at the corresponding position may be melted by strong energy focused at a predetermined position inside the substrate and a refractive index may be increased. By changing the focal position, a second waveguide capable of having a three-dimensional transmission path may be formed.

The order of the operation S20 of forming the first waveguide(s) and the operation S25 of forming the second waveguide(s) may be interchanged. In this case, the operation S10 of forming the alignment mark may be performed in advance, or may be performed together with the operation S25 of forming the second waveguide(s).

The method of forming the first waveguide by the lithography method may be limited to the transmission path being formed in a planar shape in the surface, while the manufacturing speed may be very fast. Forming the second waveguide by the writing method may be implemented in various forms in three dimensions, but the process time may be very long.

The coupling device according to an embodiment has a structure in which a manufacturing process with a long process time and a manufacturing process with a short process time may be effectively distributed, thereby being manufactured effectively in terms of time and cost.

For example, when the coupling device is configured to include only 50 planar first waveguides in a lithographic manner, the time required to manufacture may be as short as 2 minutes. However, the number of optical fibers that may be coupled to the coupling device may be limited to 50.

Meanwhile, when manufacturing a coupling device having 100 second waveguides so as to be connected to 100 optical fibers in a writing manner, the required time may be approximately 2.6 to 26 hours.

The coupling device according to embodiments may manufacture 100 coupling waveguides that may be connected to 100 optical fibers within approximately 0.3 to 2.6 hours by mixing the lithography method and the writing method.

The specific time value is merely an example, and embodiments are not limited to the illustrated time.

The coupling device manufactured as described above may be one of the coupling devices 100, 101, 102, and 103 described above or a coupling device modified therefrom.

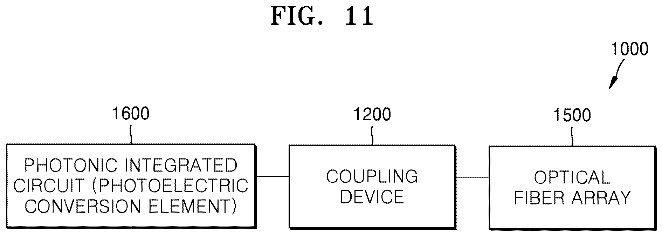

FIG. 11 is a block diagram schematically illustrating an electronic device according to an embodiment.

The electronic device 1000 may include a coupling device 1200, and an optical fiber array 1500 and a photonic integrated circuit 1600 connected to opposite sides of the coupling device 1200, respectively.

The coupling device 1200 may include any one of the coupling devices 100, 101, 102, and 103 described above, or a coupling device having a combination thereof or a modified structure thereof. That is, the end portions of the first waveguides manufactured by the lithography method may be arranged in a single row at one end of the coupling device 1200, and the end portions of the second waveguides manufactured by the writing method may be arranged in a plurality of rows at the other end of the coupling device 1200.

The optical fiber array 1500 may include a plurality of optical fibers, and the output terminals thereof may be coupled to end portions arranged in a plurality of rows at one end of the coupling device 1200, respectively.

The photonic integrated circuit 1600 may include a plurality of photoelectric conversion elements that convert light into an electrical signal, and may include planar waveguides that transmit light transmitted through the coupling device 1200 to each of the plurality of photoelectric conversion elements. These planar waveguides may be coupled to planar first waveguides arranged in a row in the coupling device 1200.

The electronic device 1000 may be used for memory to memory communication, XPU (here, XPU denotes, e.g., central processing unit (CPU), graphic processing unit (GPU), and the like) to memory communication, XPU to XPU data transmission, or the like.

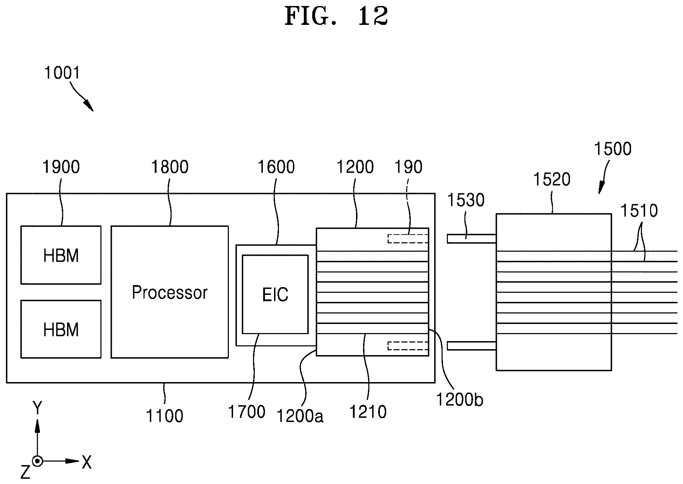

FIG. 12 schematically illustrates an electronic device according to an embodiment.

The electronic device 1001 may be a processor unit package. The electronic device 1001 may include a circuit board 1100, a photonic integrated circuit 1600 formed on the circuit board 1100, a coupling device 1200, a driving circuit EIC 1700 for driving the photonic integrated circuit 1600, a processor 1800, and a memory 1900. The memory 1900 may be a high bandwidth memory (HBM). In addition, the electronic device 1001 may further include an input interface, an output interface, and the like.

The coupling device 1200 may include a plurality of coupling waveguides 1210. One end 1200a of the coupling device 1200 may be connected to the photonic integrated circuit 1600, and the other end 1200b may be connected to the optical fiber array 1500. The optical fiber array 1500 may include a plurality of optical fibers 1510, and the output terminals of the plurality of optical fibers 1510 may be two-dimensionally arranged in a plurality of rows having different positions in the Z direction on a plane parallel to the YZ plane. The output terminals arranged two-dimensionally as described above may be coupled to the end portions of the coupling waveguide 1210 arranged two-dimensionally corresponding thereto. The optical fiber array 1500 may also include a guide pin 1530 to be coupled to the guide pin hole 190 of the coupling device 1200.

Light from the optical fiber array 1500 input in this way to the coupling device 1200 may pass through the coupling waveguide 1210 and be transmitted to a plurality of planar waveguides provided in the photonic integrated circuit 1600, thereby incident on the photoelectric conversion element. Light may be converted into an electric signal by a photoelectric conversion element.

The coupling device, the coupling device manufacturing method, and the electronic device including the coupling device described above have been described with reference to the non-limiting example embodiments shown in the drawings.

The coupling devices described above may optically couple different types of waveguides.

The coupling waveguide provided in the coupling device described above may include a first waveguide and a second waveguide manufactured in different ways, and an increase in manufacturing time may be minimized while increasing the integration of the coupling waveguide.

The present disclosure may also relate to the following clauses:
Clause 1. A coupling device comprising: a substrate comprising a first surface, a second surface, and a third surface, wherein the first surface and the second surface face away from each other, and the third surface is between and connected to the first surface and the second surface; and at least one coupling waveguide within the substrate and extending from the first surface to the second surface, wherein the at least one coupling waveguide comprises a first coupling waveguide that comprises: a first waveguide in the third surface of the substrate, the first waveguide comprising a first end portion and a second end portion, wherein the first end portion is exposed at the first surface, the second end portion is inside the substrate, and the first waveguide further comprises a transmission path from the first end portion to the second end portion in a first direction parallel to the third surface; and a second waveguide comprising a third end portion and a fourth end portion, wherein the third end portion is adjacent to the first waveguide within the substrate, the fourth end portion is exposed at the second surface, and a distance from the third surface to the third end portion is different from a distance from the third surface to the fourth end portion.
Clause 2. The coupling device of clause 1, wherein a refractive index of the first waveguide and a refractive index of the second waveguide are different from each other.
Clause 3. The coupling device of clause 2, wherein a difference between the refractive index of the first waveguide and the refractive index of the second waveguide is 0.003 or less.
Clause 4. The coupling device of any of the previous clauses, wherein the third end portion of the second waveguide is adjacent to the first waveguide such that light traveling through the second waveguide is transmitted to the first waveguide.
Clause 5. The coupling device of any of the previous clauses, wherein a partial region of the first waveguide and a partial region of the second waveguide overlap each other, in a second direction that is parallel to the third surface and perpendicular to the first direction, in the substrate.
Clause 6. The coupling device of clause 5, wherein a distance between the partial region of the first waveguide and the partial region of the second waveguide is 3 µm or less in the second direction.
Clause 7. The coupling device of clause 5 or 6, wherein a length of overlapping between the partial region of the first waveguide and the partial region of the second waveguide is 0.1 mm to 5 mm.
Clause 8. The coupling device of any of the previous clauses, wherein a partial region of the first waveguide and a partial region of the second waveguide overlap each other, in a second direction that is perpendicular to the third surface, in the substrate.
Clause 9. The coupling device of any of the previous clauses, wherein a length of the first waveguide in the first direction is 50 % or more of a length of the substrate in the first direction.
Clause 10. The coupling device of any of the previous clauses, wherein the first coupling waveguide further comprises a directional coupler between the first waveguide and the second waveguide, wherein the directional coupler extends parallel to the first waveguide, and a material of the directional coupler is the same as a material of the first waveguide.
Clause 11. The coupling device of clause 10, wherein one end of the directional coupler is in contact with the third end portion.
Clause 12. The coupling device of any of the previous clauses, wherein the first waveguide is formed by implanting ions into a material of the substrate.
Clause 13. The coupling device of clause 12, wherein the second waveguide is formed by denaturing the material of the substrate by a laser.
Clause 14. The coupling device of any of the previous clauses, wherein the at least one coupling waveguide further comprises a second coupling waveguide that comprises: a third waveguide in the third surface of the substrate, the third waveguide comprising a fifth end portion and a sixth end portion, wherein the fifth end portion is exposed at the first surface, the sixth end portion is located inside the substrate, and the third waveguide further comprises a transmission path from the fifth end portion to the sixth end portion in the first direction; and a fourth waveguide comprising a seventh end portion and an eighth end portion, wherein the seventh end portion is adjacent to the third waveguide within the substrate, the eighth end portion is exposed at the second surface, and a distance from the third surface to the seventh end portion is different from a distance from the third surface to the eighth end portion, and wherein the distance from the third surface to the eighth end portion is different from the distance from the third surface to the fourth end portion.
Clause 15. The coupling device of any of the previous clauses, further comprising a third waveguide extending from the first surface to the second surface, the third waveguide being at a constant distance from the third surface, wherein a material of the third waveguide is the same as a material of the first waveguide.
Clause 16. The coupling device of any of the previous clauses, further comprising an alignment mark in the third surface of the substrate.
Clause 17. The coupling device of any of the previous clauses, further comprising a guide pin hole that is in the substrate and opened through the second surface of the substrate.
Clause 18. A method of manufacturing a coupling device, the method comprising: forming a first waveguide within a substrate, the first waveguide including a first transmission path, wherein a distance from a surface of the substrate to the first transmission path is constant; and forming a second waveguide within the substrate, the second waveguide including a second transmission path, wherein a distance from the surface of the substrate to the second transmission path is not constant.
Clause 19. The method of clause 18, wherein the forming the first waveguide comprises ion implantation, and the forming the second waveguide comprises laser beam irradiation.
Clause 20. An electronic device comprising: a coupling device; an optical fiber array connected to a first end of the coupling device; and a photonic integrated circuit connected to a second end of the coupling device, wherein the coupling device comprises: a substrate comprising a first surface, a second surface, and a third surface, wherein the first surface and the second surface face away from each other, and the third surface is between and connected to the first surface and the second surface; and a coupling waveguide within the substrate and extending from the first surface to the second surface, wherein the coupling waveguide comprises: a first waveguide in the third surface, the first waveguide comprising a first end portion and a second end portion, wherein the first end portion is exposed at the first surface, the second end portion is inside the substrate, and the first waveguide further comprises a transmission path from the first end portion to the second end portion in a first direction parallel to the third surface; and a second waveguide comprising a third end portion and a fourth end portion, wherein the third end portion is adjacent to the first waveguide within the substrate, the fourth end portion is exposed at the second surface, and a distance from the third surface to the third end portion is different from a distance from the third surface to the fourth end portion.

It should be understood that embodiments described herein should be considered in a descriptive sense only and not for purposes of limitation. Descriptions of features or aspects within each embodiment of the disclosure should typically be considered as available for other similar features or aspects in other embodiments of the disclosure. While example embodiments have been described with reference to the figures, it will be understood by those of ordinary skill in the art that various changes in form and details may be made therein without departing from the scope as defined by the appended claims.

## Claims

1. A coupling device, comprising:
a substrate comprising a first surface, a second surface, and a third surface, wherein the first surface and the second surface face away from each other, and the third surface is between and connected to the first surface and the second surface; and
at least one coupling waveguide within the substrate and extending from the first surface to the second surface,
wherein the at least one coupling waveguide comprises a first coupling waveguide that comprises:
a first waveguide in the third surface of the substrate, the first waveguide comprising a first end portion and a second end portion, wherein the first end portion is exposed at the first surface, the second end portion is inside the substrate, and the first waveguide further comprises a transmission path from the first end portion to the second end portion in a first direction parallel to the third surface; and
a second waveguide comprising a third end portion and a fourth end portion, wherein the third end portion is adjacent to the first waveguide within the substrate, the fourth end portion is exposed at the second surface, and a distance from the third surface to the third end portion is different from a distance from the third surface to the fourth end portion.

2. The coupling device of claim 1, wherein a refractive index of the first waveguide and a refractive index of the second waveguide are different from each other,
wherein, preferably, a difference between the refractive index of the first waveguide and the refractive index of the second waveguide is 0.003 or less.

3. The coupling device of claim 1 or 2, wherein the third end portion of the second waveguide is adjacent to the first waveguide such that light traveling through the second waveguide is transmitted to the first waveguide.

4. The coupling device of any of the previous claims, wherein a partial region of the first waveguide and a partial region of the second waveguide overlap each other, in a second direction that is parallel to the third surface and perpendicular to the first direction, in the substrate,
wherein, preferably, at least one of the following applies:
a distance between the partial region of the first waveguide and the partial region of the second waveguide is 3 µm or less in the second direction;
a length of overlapping between the partial region of the first waveguide and the partial region of the second waveguide is 0.1 mm to 5 mm.

5. The coupling device of any of the previous claims, wherein a partial region of the first waveguide and a partial region of the second waveguide overlap each other, in a third direction that is perpendicular to the third surface, in the substrate.

6. The coupling device of any of the previous claims, wherein a length of the first waveguide in the first direction is 50% or more of a length of the substrate in the first direction.

7. The coupling device of any of the previous claims, wherein the first coupling waveguide further comprises a directional coupler between the first waveguide and the second waveguide,
wherein the directional coupler extends parallel to the first waveguide, and wherein a material of the directional coupler is the same as a material of the first waveguide,
wherein, preferably, one end of the directional coupler is in contact with the third end portion.

8. The coupling device of any of the previous claims, wherein the first waveguide is formed by implanting ions into a material of the substrate,
wherein, preferably, the second waveguide is formed by denaturing the material of the substrate by a laser.

9. The coupling device of any of the previous claims, wherein the at least one coupling waveguide further comprises a second coupling waveguide that comprises:
a third waveguide in the third surface of the substrate, the third waveguide comprising a fifth end portion and a sixth end portion, wherein the fifth end portion is exposed at the first surface, the sixth end portion is located inside the substrate, and the third waveguide further comprises a transmission path from the fifth end portion to the sixth end portion in the first direction; and
a fourth waveguide comprising a seventh end portion and an eighth end portion, wherein the seventh end portion is adjacent to the third waveguide within the substrate, the eighth end portion is exposed at the second surface, and a distance from the third surface to the seventh end portion is different from a distance from the third surface to the eighth end portion, and
wherein the distance from the third surface to the eighth end portion is different from the distance from the third surface to the fourth end portion.

10. The coupling device of any of the previous claims, further comprising a third waveguide extending from the first surface to the second surface, the third waveguide being at a constant distance from the third surface,
wherein a material of the third waveguide is the same as a material of the first waveguide.

11. The coupling device of any of the previous claims, further comprising an alignment mark in the third surface of the substrate.

12. The coupling device of any of the previous claims, further comprising a guide pin hole that is in the substrate and opened through the second surface of the substrate.

13. A method of manufacturing a coupling device, the method comprising:
forming a first waveguide within a substrate, the first waveguide including a first transmission path, wherein a distance from a surface of the substrate to the first transmission path is constant; and
forming a second waveguide within the substrate, the second waveguide including a second transmission path, wherein a distance from the surface of the substrate to the second transmission path is not constant.

14. The method of claim 13, wherein the forming the first waveguide comprises ion implantation, and the forming the second waveguide comprises laser beam irradiation.

15. An electronic device, comprising:
a coupling device as defined in any of the claims 1-12;
an optical fiber array connected to a first end of the coupling device; and
a photonic integrated circuit connected to a second end of the coupling device.
